# FASCICULE DE BREVET EUROPEEN

(11) **EP 2 918 856 B1**
(45) Date de publication et mention de la délivrance du brevet: **21.12.2016**
(21) Numéro de dépôt: 15159074.2
(22) Date de dépôt: 13.03.2015
(51) Int. Cl.: F16B 31/02

(54) **Rondelle destinée à être mise en oeuvre dans un assemblage vissé et procédé d'assemblage mettant en oeuvre la rondelle**
Unterlegscheibe zur Verwendung in einer Schraubenverbindung, und Zusammenbauverfahren zum Einsatz dieser Unterlegscheibe
Washer intended for being used in a screwed assembly and assembly method using the washer

(30) Priorité: 14.03.2014 FR 1400612
(43) Date de publication de la demande: 16.09.2015
(73) Titulaire: Thales, 92400 Courbevoie (FR)
(72) Inventeur: MISTRAL, Alain, 06150 CANNES LA BOCCA (FR); LEGRAND, Silvain, 06000 NICE (FR); ALABREBIS, Yves, 06800 CAGNES SUR MER (FR)
(74) Mandataire: Collet, Alain

(56) Documents cités:
- DE-A1- 2 939 096
- DE-A1- 3 148 730
- DE-A1- 4 433 688
- FR-A- 967 877

## Description

L'invention concerne le domaine des assemblages réalisés par liaisons vissés. Ce type d'assemblage est largement utilisé pour fixer plusieurs pièces mécaniques entre elles. Il met en oeuvre plusieurs accessoires tels que des vis, écrous et rondelles.

Le dimensionnement des accessoires utilisés pour assurer la fixation des pièces doit permettre d'éviter tout décollement ou tout glissement des pièces mécaniques entre elles (voir p. ex. FR 967 877 A). Plus précisément, il est nécessaire de maitriser les efforts opérés par les accessoires sur les pièces mécaniques. Ces efforts doivent être suffisants pour résister aux conditions d'environnement de l'assemblage, comme par exemple un environnement vibratoire. On trouve notamment des environnements très contraignants dans le domaine spatial. Lors du lancement de satellites, des vibrations très intenses apparaissent pouvant entrainer le desserrage d'assemblages vissés. Après lancement, il est impossible d'intervenir pour resserrer ces assemblages. Il est donc nécessaire de maîtriser parfaitement l'assemblage et le procédé de mise en oeuvre.

Une méthode couramment utilisée consiste à serrer la vis ou l'écrou avec un couple prédéfini, par exemple au moyen d'une clé dynamométrique. Cette méthode ne donne pas entièrement satisfaction car elle ne permet pas de garantir des efforts très élevés, notamment du fait de dispersions importantes. En effet, cette méthode mesure l'effort de serrage de façon indirecte. Elle oblige à utiliser des calculs statistiques pour garantir la valeur d'un effort de serrage à l'intérieur d'une tolérance prédéfinie.

Pour mesurer directement l'effort de serrage, il est possible d'intercaler dans l'assemblage un capteur de mesure d'effort, comme par exemple un capteur à jauge de déformation. Ce type de solution tend à augmenter le coût de l'assemblage, tant au niveau des éléments supplémentaires à ajouter dans l'assemblage qu'au niveau du temps de mise en oeuvre nécessitant de réaliser une mesure et de la comparer à une valeur attendue.

L'invention vise à assurer la maîtrise de l'effort appliqué dans un assemblage vissé de façon simple en évitant tout recours à une mesure d'effort.

A cet effet, l'invention a pour objet une rondelle destinée à être mise en oeuvre dans un assemblage vissé, la rondelle comprenant deux faces en vis-à-vis, la rondelle étant destinée à être comprimée entre ses deux faces dans l'assemblage, caractérisée en ce qu'elle comprend deux matériaux s'étendant tous deux d'une face à l'autre, en ce qu'un premier des deux matériaux possède une raideur plus faible qu'un second des deux matériaux, en ce que les raideurs des deux matériaux sont définies de façon à permettre une déformation du premier matériau dans son domaine élastique et du second matériau dans son domaine plastique.

L'invention a également pour objet un procédé d'assemblage de pièces mécaniques au moyen d'une vis et d'une rondelle intercalée dans l'assemblage, la rondelle comprenant deux faces en vis-à-vis, la rondelle étant destinée à être comprimée entre ses deux faces dans l'assemblage, la rondelle comprenant en outre deux matériaux s'étendant tous deux d'une face à l'autre, un premier des deux matériaux possédant une raideur plus faible qu'un second des deux matériaux, le procédé étant caractérisé en ce qu'il consiste à réaliser l'assemblage en serrant l'assemblage jusqu'à atteindre une déformation plastique du second matériau, le premier matériau restant dans son domaine de déformation élastique.

L'invention peut être mise en oeuvre au moyen de tout système vis écrou dans lequel on intercale la rondelle de l'invention. On peut mettre en oeuvre une vis ou un goujon. Le serrage peut être assuré par rotation de la vis, ou d'un écrou coopérant avec la vis ou le goujon. Une rondelle conforme à l'invention peut être disposée directement sous l'écrou, sous une tête de la vis ou encore entre les différentes pièces que l'on souhaite assembler.

L'invention sera mieux comprise et d'autres avantages apparaîtront à la lecture de la description détaillée d'un mode de réalisation donné à titre d'exemple, description illustrée par le dessin joint dans lequel :
la figure 1 représente un assemblage vissé mettant en oeuvre une rondelle conforme à l'invention ;
les figures 2A et 2B représentent la rondelle de la figure 1 ;
la figure 3 représente la charge en fonction de l'allongement d'un des matériaux constituant la rondelle ;
les figures 4, 5, 6 et 7 représentent plusieurs variantes de réalisation d'une rondelle conforme à l'invention.

Par souci de clarté, les mêmes éléments porteront les mêmes repères dans les différentes figures.

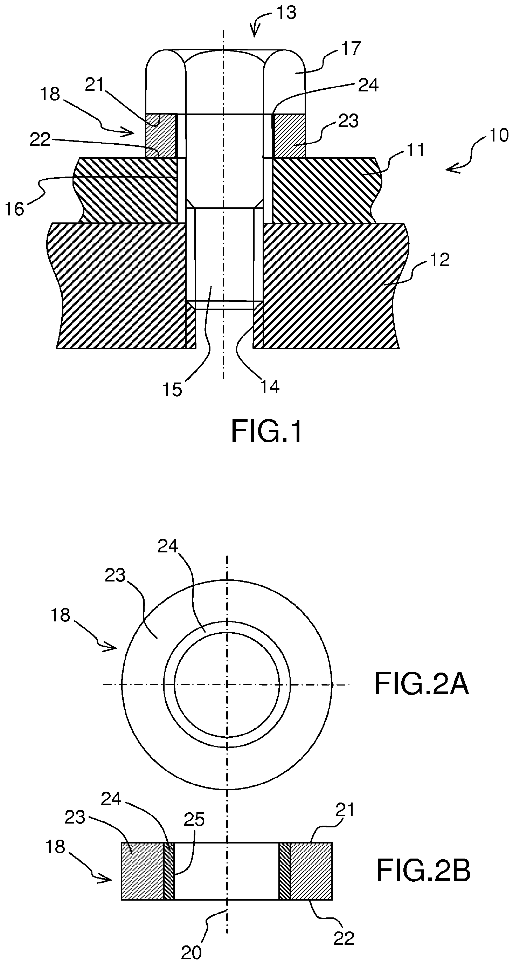

La figure 1 représente un assemblage vissé 10. Deux pièces mécaniques 11 et 12 sont maintenues fixées l'une à l'autre au moyen d'une vis 13. La pièce 12 comprend un taraudage 14 coopérant avec une partie filetée 15 de la vis 13. La pièce 11 comprend un alésage 16 permettant à la vis de le traverser librement. La vis 13 comprend une tête 17 prenant appui contre la pièce 11 par l'intermédiaire d'une rondelle 18.

La rondelle 18 est circulaire et s'étend autour d'un axe 20. La rondelle 18 est percée suivant l'axe 20 sensiblement au diamètre nominal de la vis 13. Une fois l'assemblage réalisé, la vis 13 traverse la rondelle 18 et s'étend donc selon l'axe 20.

La rondelle 18 comprend deux faces 21 et 22 en vis-à-vis, toutes deux perpendiculaires à l'axe 20. Autrement dit, les deux faces 21 et 22 sont parallèles entre elles. Lors de l'assemblage la rondelle 18 est comprimée entre ses deux faces 21 et 22 dans l'assemblage.

Selon l'invention, la rondelle 18 comprend deux matériaux s'étendant tous deux entre les deux faces 21 et 22. Les deux matériaux sont choisis pour posséder des raideurs différentes définies de façon à permettre une déformation du premier matériau dans son domaine élastique et du second matériau dans son domaine plastique. Lors de l'assemblage de la rondelle 18, les deux matériaux subissent la compression parallèlement l'un à l'autre.

La tête 17 de la vis 18 prend appui sur les deux matériaux présents dans la rondelle 18 par la face 21. Les deux matériaux de la rondelle 18 prennent appui sur la pièce 11 par la face 22. Les deux matériaux ont avantageusement une section constante parallèlement aux deux faces 21 et 22.

Les figures 2A et 2B représentent plus en détail une variante réalisation de la rondelle 18. La figure 2A représente la rondelle 18 en vue de dessus perpendiculairement à l'axe 20 et la figure 2B représente la rondelle 18 en coupe par un plan contenant l'axe 20.

Dans la variante représentée, la rondelle 18 est formée par deux matériaux 23 et 24 coaxiaux. La rondelle 18 comprend un alésage cylindrique 25 la traversant d'une face à l'autre. L'alésage 25 s'étend selon l'axe 20 et permet à la vis 13 de traverser la rondelle 18. Le matériau 24 s'étend sur la surface de l'alésage 25. Autrement dit, le matériau 23 forme l'extérieur de la rondelle 18 et le matériau 24 forme l'intérieur de la rondelle 18 au niveau de son alésage 25. Lors de l'assemblage et du serrage de la vis 13, les deux matériaux 23 et 24 sont comprimés en parallèle.

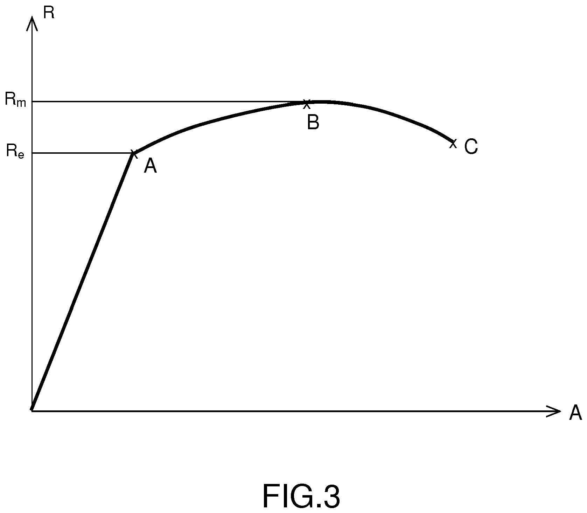

La figure 3 représente la charge en fonction de l'allongement du matériau destiné à se déformer dans son domaine plastique lors de l'assemblage, en l'occurrence le matériau 24. L'allongement est représenté en abscisse et la charge en ordonnée. A l'origine du repère, le matériau 24 ne subit aucune contrainte. La charge représente l'effort de compression ramené par unité de surface du matériau. L'allongement représente la déformation du matériau ramené par unité de longueur du matériau. Dans l'exemple représenté sur la figure 1, la charge est l'effort exercé par la vis 13 lors de son serrage divisé par la surface du matériau 24 perpendiculairement à l'axe 20. L'allongement est la variation de longueur du matériau 24 divisé par sa longueur initiale selon l'axe 20. Le matériau 24 est comprimé, l'allongement est donc négatif. Sur la figure 3, on a représenté la valeur absolue de l'allongement. Dans la pratique, de nombreux matériaux, comme par exemple les matériaux métalliques, se comporte de façon symétrique et opposée en compression et en traction.

Entre l'origine du repère et un point A de la courbe représenté sur la figure 3, le matériau 24 s'allonge de façon proportionnelle à la charge qu'il subit. Le matériau 24 se situe dans son domaine élastique. L'allongement est réversible et lorsque la charge est supprimée, l'allongement disparait. La charge maximale du domaine élastique est notée Re et correspond au point A. Au-delà du domaine élastique, lorsque la charge augmente, le matériau 24 entre dans un domaine de déformation plastique. La déformation devient alors irréversible et permanente. La charge admissible peut croitre jusqu'à une valeur maximum notée Rm au-delà de laquelle, le matériau se rompt. La pente de la courbe représentée sur la figure 3 subit une diminution brusque au-delà du point A jusqu'à atteindre une pente nulle en un point B correspondant à la charge maximale Rm. Au-delà, la pente de la courbe devient négative jusqu'à atteindre un point C où le matériau se rompt.

L'invention met à profit la rupture de pente au point A entre le domaine élastique et le domaine plastique. Lors du serrage de la vis 13, dans le domaine élastique, l'effort de serrage croît linéairement avec la déformation du matériau. En augmentant le serrage, lors du passage du domaine élastique au domaine plastique, la perte de linéarité de la déformation peut être ressentie. Un opérateur ou un capteur de mesure de couple peut déterminer cette rupture de pente. Dans la pratique certains matériaux montrent, au niveau du point A, une zone de la courbe présentant un décrochement sensiblement horizontal entre le domaine élastique et le domaine plastique où la pente de la courbe repart en croissance. Ce décrochement facilite la détermination du passage entre les deux domaines élastique et plastique.

La rupture de pente due à la plastification du matériau 24 peut-être ressentie par l'opérateur à l'aide d'une clé classique ou d'une clé dynamométrique. Cette rupture de pente peut-être observée en mesurant le couple et l'angle de serrage. Le couple et l'angle de serrage peuvent être mesurés à l'aide d'une clé manuelle ou automatique couple-angle. L'utilisation d'une visseuse automatique couple-angle permet de s'affranchir des dispersions liées à l'opérateur, la visseuse stoppe le serrage dès qu'une rupture de pente de supérieure à une valeur donnée dans la courbe couple-angle de serrage est mesurée.

Etant donné que la déformation est proportionnellement plus importante dans le domaine plastique que dans le domaine élastique, une rondelle conforme à l'invention est particulièrement adaptée au serrage à l'angle manuel ou automatique. L'application d'un angle donné (par exemple ¼ de tour) une fois un couple donné atteint permet d'être de façon certaine dans le domaine plastique du matériau 24 et donc d'assurer un effort de serrage minimum dans l'assemblage 10.

Le choix des deux matériaux 23 et 24 et leur dimensionnement respectif sont réalisés en fonction de l'effort de serrage souhaité pour l'assemblage vissé. La valeur de l'effort souhaité correspond à l'effort nécessaire au passage du domaine élastique au domaine plastique pour le matériau 24. Pour cette valeur, le matériau 23 reste dans son domaine élastique pour ne pas perturber la détermination du passage du domaine élastique au domaine plastique du matériau 24.

En d'autres termes, le procédé d'assemblage selon l'invention consiste à serrer l'assemblage jusqu'à atteindre une déformation plastique du matériau 24, le matériau 23 restant dans son domaine de déformation élastique.

Dans la variante des figures 2A et 2B, lors du serrage de l'assemblage, le matériau 24 peut flamber et réduire le diamètre de l'alésage 25. Lors du flambage le matériau 24 peut rester dans son domaine élastique. La fonction recherchée de permettre la détection du passage du domaine élastique au domaine plastique n'est plus remplie. Pour pallier cet inconvénient, on peut fixer les deux matériaux 23 et 24 entre eux, par exemple par collage.

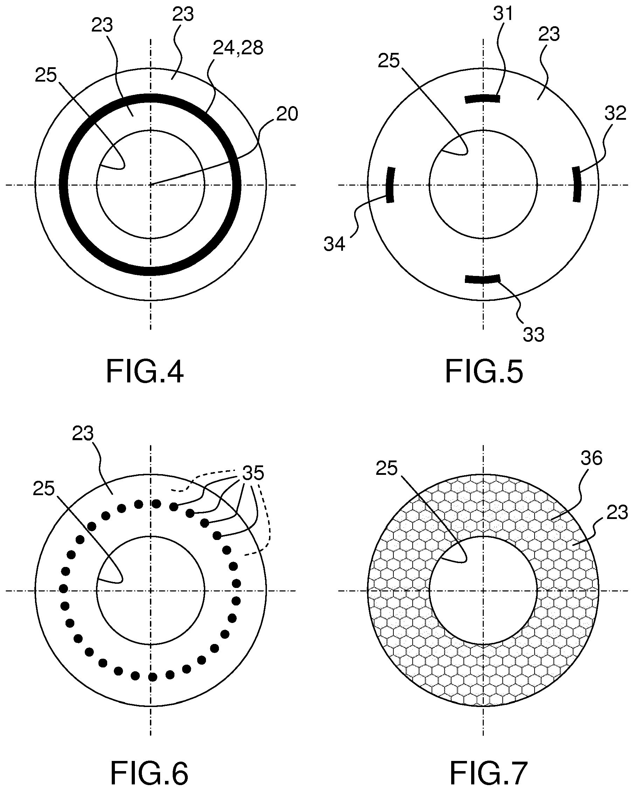

Alternativement, on peut noyer complètement le matériau 24 dans le matériau 23. Plus précisément, le matériau 24 comprend des faces perpendiculaires aux deux faces 21 et 22 de la rondelle 18. Les faces du matériau 24 sont toutes noyées dans le premier matériau 23. Plusieurs variantes de matériau 24 noyé sont représentées sur les figures 4 à 7 qui représentent la rondelle 18 en vue de dessus perpendiculairement à l'axe 20.

Sur la figure 4, le matériau 24 forme un cylindre 28 s'étendant perpendiculairement aux deux faces 21 et 22 de la rondelle 18. Le cylindre 28 peut être concentrique de l'alésage 25.

Sur la figure 5, le matériau 24 comprend plusieurs segments angulaires entourant l'alésage 25. Dans l'exemple de la figure 5 quatre segments 31, 32, 33 et 34 sont représentés. Les segments angulaires sont une section constante perpendiculairement à l'axe 20 et s'étendent de la face 21 à la face 22. Les segments angulaires sont uniformément répartis autour de l'alésage 25.

Sur la figure 6, le matériau 24 comprend plusieurs pieux 35 avantageusement identiques. Les pieux 35 sont une section constante perpendiculairement aux deux faces 21 et 22. Les pieux 35 sont uniformément répartis autour de l'alésage 25.

La répartition uniforme des segments angulaires 31, 32, 33 et 34 ainsi que des pieux 35 permet de déterminer un effort (passage du domaine élastique au domaine plastique pour le matériau 24) centré sur l'axe 20. Le nombre de pieux 35 ou de segments angulaires est déterminé pour atteindre un effort donné en fonction de la nature du matériau 24, notamment de sa résistance élastique Re et de sa section perpendiculairement à l'axe 20.

Sur la figure 7, le matériau 24 forme un treillis 36 noyé dans le matériau 23. Sur la figure 7, on représenté un nid d'abeille s'ouvrant sur les deux faces 21 et 22. D'autres formes de treillis sont possibles. Ils ont avantageusement une structure ouverte afin que le matériau 24 puisse combler l'ensemble des espaces vides de la structure en treillis.

Dans toutes les variantes représentées sur les figures 2, 4, 5, 6 et 7 les deux matériaux 23 et 24 s'étendent entre les deux faces 21 et 22 de la rondelle 18. Lors de l'assemblage et du serrage de la vis 13, les deux matériaux 23 et 24 sont comprimés en parallèle.

Le matériau 24 peut être métallique. On peut par exemple choisir un alliage à base de titane. Le matériau 23 peut être moulé autour du matériau 24. Le matériau 23 peut être à base de polyétheréthercétone également connu par son abréviation : PEEK. Ce matériau présente de bonnes caractéristiques mécaniques compatibles avec un environnement sévère tel que l'environnement spatial. Ce matériau présente notamment un allongement supérieur à celui du titane permettant ainsi de rester dans son domaine élastique lorsque le titane du matériau 24 atteint son domaine plastique.

## Revendications

1. Rondelle destinée à être mise en oeuvre dans un assemblage (10) vissé, la rondelle (18) comprenant deux faces (21, 22) en vis-à-vis, la rondelle (18) étant destinée à être comprimée entre ses deux faces (21, 22) dans l'assemblage (10), **caractérisée en ce qu'**elle comprend deux matériaux (23, 24) s'étendant tous deux d'une face à l'autre (21, 22), **en ce qu'**un premier (23) des deux matériaux possède une raideur plus faible qu'un second (24) des deux matériaux, **en ce que** les raideurs des deux matériaux sont définies de façon à permettre une déformation du premier matériau (23) dans son domaine élastique et du second matériau (24) dans son domaine plastique.

2. Rondelle selon la revendication 1, **caractérisée en ce que** les deux faces (21, 22) sont parallèles et **en ce que** deux matériaux (23, 24) ont une section constante parallèlement aux deux faces (21, 22).

3. Rondelle selon l'une des revendications 1 ou 2, **caractérisée en ce qu'**elle comprend un alésage cylindrique (25) la traversant d'une face à l'autre (21, 22), l'alésage (25) s'étendant selon un axe (20) perpendiculaire aux deux faces (21, 22).

4. Rondelle selon la revendication 3, **caractérisée en ce que** le second matériau (24) s'étend sur la surface de l'alésage (25).

5. Rondelle selon l'une des revendications 1 à 3, **caractérisée en ce que** le second matériau (24) comprend des faces perpendiculaires aux deux faces (21, 22) de la rondelle (18), et **en ce que** les faces du second matériau (24) sont toutes noyées dans le premier matériau (23).

6. Rondelle selon la revendication 5, **caractérisée en ce que** le second matériau (24) forme un cylindre (28) s'étendant perpendiculairement aux deux faces (21, 22) de la rondelle (18).

7. Rondelle selon la revendication 5, **caractérisée en ce que** le second matériau (24) comprend plusieurs segments angulaires (31, 32, 33, 34) entourant l'alésage (25).

8. Rondelle selon la revendication 5, **caractérisée en ce que** le second matériau (24) comprend plusieurs pieux (35) s'étendant perpendiculairement aux deux faces (21, 22) de la rondelle (18).

9. Rondelle selon l'une des revendications 1 à 3, **caractérisée en ce que** le second matériau (24) forme un treillis (36) noyé dans le premier matériau (23).

10. Rondelle selon l'une des revendications précédentes, **caractérisée en ce que** le second matériau (24) est métallique.

11. Rondelle selon l'une des revendications précédentes, **caractérisée en ce que** le premier matériau (23) est à base de polyétheréthercétone.

12. Procédé d'assemblage de pièces mécaniques (11, 12) au moyen d'une vis (13) et d'une rondelle (18) intercalée dans l'assemblage (10), la rondelle (18) comprenant deux faces (21, 22) en vis-à-vis, la rondelle (18) étant destinée à être comprimée entre ses deux faces (21, 22) dans l'assemblage (10), la rondelle (18) comprenant en outre deux matériaux (23, 24) s'étendant tous deux d'une face à l'autre (21, 22), un premier (23) des deux matériaux possédant une raideur plus faible qu'un second (24) des deux matériaux, le procédé étant **caractérisé en ce qu'**il consiste à réaliser l'assemblage en serrant l'assemblage jusqu'à atteindre une déformation plastique du second matériau (24), le premier matériau (23) restant dans son domaine de déformation élastique.

## Patentansprüche

1. Unterlegscheibe für den Einsatz in einer Schraubbaugruppe (10), wobei die Unterlegscheibe (18) zwei gegenüberliegende Flächen (21, 22) aufweist, wobei die Unterlegscheibe (18) zum Komprimieren zwischen den beiden Flächen (21, 22) in der Baugruppe (10) gedacht ist, **dadurch gekennzeichnet, dass** sie zwei Materialien (23, 24) umfasst, die beide von einer Fläche zur anderen (21, 22) verlaufen, dadurch, dass ein erstes (23) der beiden Materialien eine geringere Steifigkeit hat als ein zweites (24) der beiden Materialien, dadurch, dass die Steifigkeiten der beiden Materialien so definiert sind, dass eine Verformung des ersten Materials (23) in seinem elastischen Bereich und des zweiten Materials (24) in seinem plastischen Bereich zugelassen wird.

2. Unterlegscheibe nach Anspruch 1, **dadurch gekennzeichnet, dass** die beiden Flächen (21, 22) parallel sind, und dadurch, dass zwei Materialien (23, 24) einen konstanten Querschnitt parallel zu den zwei Flächen (21, 22) haben.

3. Unterlegscheibe nach Anspruch 1 oder 2, **dadurch gekennzeichnet, dass** sie eine zylindrische Bohrung (25) aufweist, die durch die Unterlegscheibe von einer Fläche zur anderen (21, 22) verläuft, wobei die Bohrung (25) entlang einer Achse (20) lotrecht zu den beiden Flächen (21, 22) verläuft.

4. Unterlegscheibe nach Anspruch 3, **dadurch gekennzeichnet, dass** das zweite Material (24) auf der Oberfläche der Bohrung (25) verläuft.

5. Unterlegscheibe nach einem der Ansprüche 1 bis 3, **dadurch gekennzeichnet, dass** das zweite Material (24) Flächen lotrecht zu den beiden Flächen (21, 22) der Unterlegscheibe (18) aufweist, und dadurch, dass die Flächen des zweiten Materials (24) alle in dem ersten Material (23) eingebettet sind.

6. Unterlegscheibe nach Anspruch 5, **dadurch gekennzeichnet, dass** das zweite Material (24) einen Zylinder (28) bildet, der lotrecht zu den zwei Flächen (21, 22) der Unterlegscheibe (18) verläuft.

7. Unterlegscheibe nach Anspruch 5, **dadurch gekennzeichnet, dass** das zweite Material (24) mehrere Winkelsegmente (31, 32, 33, 34) umfasst, die die Bohrung (25) umgeben.

8. Unterlegscheibe nach Anspruch 5, **dadurch gekennzeichnet, dass** das zweite Material (24) mehrere Stäbe (35) umfasst, die lotrecht zu den zwei Flächen (21, 22) der Unterlegscheibe (18) verlaufen.

9. Unterlegscheibe nach einem der Ansprüche 1 bis 3, **dadurch gekennzeichnet, dass** das zweite Material (24) ein in dem ersten Material (23) eingebettetes Netz (36) bildet.

10. Unterlegscheibe nach einem der vorherigen Ansprüche, **dadurch gekennzeichnet, dass** das zweite Material (24) metallisch ist.

11. Unterlegscheibe nach einem der vorherigen Ansprüche, **dadurch gekennzeichnet, dass** das erste Material (23) auf Polyetheretherketon basiert.

12. Verfahren zum Montieren von mechanischen Teilen (11, 12) mit Hilfe einer Schraube (13) und einer in der Baugruppe (10) zwischengelegten Unterlegscheibe (18), wobei die Unterlegscheibe (18) zwei gegenüberliegende Flächen (21, 22) aufweist, wobei die Unterlegscheibe (18) zum Komprimieren zwischen den beiden Flächen (21, 22) in der Baugruppe (10) gedacht ist, wobei die Unterlegscheibe (18) ferner zwei Materialien (23, 24) umfasst, die beide von einer Fläche zur anderen (21, 22) verlaufen, wobei ein erstes (23) der beiden Materialien eine geringere Steifigkeit hat als ein zweites (24) der beiden Materialien, wobei das Verfahren **dadurch gekennzeichnet ist, dass** es das Erzeugen der Baugruppe durch Festziehen der Baugruppe beinhaltet, bis eine plastische Verformung des zweiten Materials (24) erzielt ist, wobei das erste Material (23) in seinem elastischen Verformungsbereich bleibt.

## Claims

1. A washer intended to be used in a screwed assembly (10), said washer (18) comprising two opposite faces (21, 22), said washer (18) being intended to be compressed between said two faces (21, 22) in said assembly (10), **characterised in that** it comprises two materials (23, 24) that both extend from one face to the other (21, 22), **in that** a first material (23) of said two materials is less stiff than a second material (24) of said two materials, **in that** the stiffnesses of said two materials are defined so as to allow a deformation of said first material (23) in its elastic range and of said second material (24) in its plastic range.

2. The washer according to claim 1, **characterised in that** said two faces (21, 22) are parallel and **in that** two materials (23, 24) have a constant section parallel to said two faces (21, 22).

3. The washer according to claim 1 or 2, **characterised in that** it comprises a cylindrical bore (25) passing through said washer from one face to the other (21, 22), said bore (25) extending along an axis (20) that is perpendicular to said two faces (21, 22).

4. The washer according to claim 3, **characterised in that** said second material (24) extends on the surface of said bore (25).

5. The washer according to any one of claims 1 to 3, **characterised in that** said second material (24) comprises faces that are perpendicular to said two faces (21, 22) of said washer (18) and **in that** the faces of said second material (24) are all embedded in said first material (23).

6. The washer according to claim 5, **characterised in that** said second material (24) forms a cylinder (28) extending perpendicular to said two faces (21, 22) of said washer (18).

7. The washer according to claim 5, **characterised in that** said second material (24) comprises a plurality of angular segments (31, 32, 33, 34) surrounding said bore (25).

8. The washer according to claim 5, **characterised in that** said second material (24) comprises a plurality of rods (35) extending perpendicular to said two faces (21, 22) of said washer (18).

9. The washer according to any one of claims 1 to 3, **characterised in that** said second material (24) forms a mesh (36) embedded in said first material (23).

10. The washer according to any one of the preceding claims, **characterised in that** said second material (24) is metallic.

11. The washer according to any one of the preceding claims, **characterised in that** said first material (23) is polyetheretherketone-based.

12. A method for assembling mechanical parts (11, 12) by means of a screw (13) and a washer (18) interposed in said assembly (10), said washer (18) comprising two opposite faces (21, 22), said washer (18) being intended to be compressed between said two faces (21, 22) in said assembly (10), said washer (18) further comprising two materials (23, 24) that both extend from one face to the other (21, 22), a first material (23) of said two materials being less stiff than a second material (24) of said two materials, said method being **characterised in that** it comprises producing said assembly by tightening said assembly until a plastic deformation of said second material (24) is achieved, said first material (23) remaining in its range of elastic deformation.
